Europäisches Patentamt

European Patent Office

Office européen des brevets

(19)

(11) EP 1 158 728 A2

(12) **EUROPEAN PATENT APPLICATION**

(43) Date of publication:
28.11.2001 Bulletin 2001/48

(51) Int Cl.$^7$: **H04L 12/56**

(21) Application number: 01112009.4

(22) Date of filing: 23.05.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: 24.05.2000 US 206617 P
24.05.2000 US 206996 P
24.07.2000 US 220335 P

(71) Applicant: **Alcatel Internetworking (PE), Inc.**
**Spokane, Washington 99206 (US)**

(72) Inventors:
• **Tallegas, Mathieu**
**Verdale, Washington 99037 (US)**
• **Paul, Dennis**
**Liberty Lake, Washington 99019 (US)**
• **Fromm, Kelly**
**Verdale, Washington 99037 (US)**

(74) Representative:
**Dreiss, Fuhlendorf, Steimle & Becker**
**Patentanwälte,**
**Postfach 10 37 62**
**70032 Stuttgart (DE)**

(54) **Packet processor with multi-level policing logic**

(57) A switch includes a backplane and multiple packet processors. One or more packet processors include multi-level policing logic. The packet processor receives a packet and classifies the packet into multiple policeable groups. The packet is compared against bandwidth contracts defined for the policeable groups. Nested lookups are performed for the packet in a polic-ing database to identify the multiple groups and to re-trieve policing data for the multiple policeable groups. The policing results, which may be combined into a sin-gle policing result by taking the worst case policing re-sult, are applied to disposition logic as recommenda-tions, and are combined with other disposition recom-mendations to make a disposition decision for the pack-et.

FIG. 1

EP 1 158 728 A2

**Description**

CROSS-REFERENCE TO RELATED APPLICATION (S)

The present application claims the priority of U.S. Provisional Application No. 60/206,617 entitled "System and Method for Enhanced Line Cards" filed May 24, 2000, U.S. Provisional Application No. 60/206,996 entitled "Flow Resolution Logic System and Method" filed May 24, 2000 and U.S. Provisional Application No. 60/220,335 entitled "Programmable Packet Processor" filed July 24, 2000, the contents of all of which are fully incorporated by reference herein. The present application contains subject matter related to the subject matter disclosed in U.S. Patent Application No. 09/751,194 entitled "Programmable Packet Processor with Flow Resolution Logic" filed December 28, 2000, the contents of which are fully incorporated by reference herein.

FIELD OF THE INVENTION

This invention relates generally to data communication switches, and more particularly to a data communication switch employing multiple levels of rate policing on a data packet.

BACKGROUND OF THE INVENTION

Rate policing is increasingly becoming important in data communication networks as customers entitled to different qualities of service (QoS) compete for the available bandwidth of a common set of network resources. Rate policing is typically accomplished at each switch by classifying each packet into a single policy group and comparing the classified packet against one or more bandwidth contracts defined for the group. Based on the identified bandwidth contract, the packet may be forwarded, be forwarded with a discard eligible marking, or be discarded.

Existing rate policing methods typically police data traffic on a per-port basis with no regard to other information about the traffic. Data exceeding the rate subscribed by the customer is typically marked to be dropped if congestion occurs. Thus, a customer typically has no flexibility to selectively drop certain data based on the data type, such as based on the particular application associated with the data.

With the increasing desire to tailor communication networks to the individualized needs of customers, it is desirable to provide policing logic that has increased flexibility, but whose implementation is not so complex as to substantially reduce line speed.

SUMMARY OF THE INVENTION

In one embodiment of the present invention, a packet switching controller is provided. The packet switching controller includes an input for receiving a packet and a policing element for classifying the packet into a plurality of policeable groups. The packet is compared against one or more bandwidth contracts defined for the policeable groups to produce one or more policing results.

In another embodiment of the present invention, a method of processing a packet is provided. A packet is received and classified into a plurality of policeable groups. The packet is compared against one or more bandwidth contracts defined for the policeable groups to produce one or more policing results.

In yet another embodiment of the present invention, a method for policing a data packet received by a data communication switch is provided. The data packet is classified into a plurality of policeable groups. Then, policing data associated with one or more policeable groups is identified. The policing data is applied to produce one or more policing results for the policeable groups, and a disposition of the data packet is recommended from the policing results.

In still another embodiment of the present invention, a method for policing a data packet received by the data communication switch is provided. A policing database including a plurality of policing data entries specifying policing data for a plurality of policeable groups is created. A first identifier is applied for retrieving a first policing data associated with a first policeable group and a second identifier identifying a second policeable group. Then, the first policing data is applied to produce a first policing result. Further, the second identifier is applied for retrieving a second policing data. Then, the second policing data is applied to produce a second policing result. A disposition of the data packet is recommended from the first and second policing results.

In a further embodiment of the present invention, a policing engine for a data communication node is provided. The policing engine classifies a packet into a plurality of policeable groups. The packet is compared for the respective ones of the policeable groups against respective ones of bandwidth contracts to produce respective ones of policing results.

In a still further embodiment of the present invention, a policing engine for a data communication node is provided. A first policeable group identifier is applied to a policing database to retrieve first policing data and a second policeable group identifier. The first policing data is applied to produce a first policing result, and the second policeable group identifier is applied to the policing database to retrieve second policing data. The second policing data is applied to produce a second policing result.

In a yet further embodiment of the present invention, a packet processor is provided. The packet processor includes an input for receiving a packet and policing means for classifying the packet into a plurality of policeable groups. The packet is compared against one or more bandwidth contracts defined for the policeable groups to produce one or more policing results.

DESCRIPTION OF THE DRAWINGS

FIG. 1 illustrates a network environment including a packet switching node in which one embodiment of the present invention is used;

FIG. 2 is a block diagram of a switching interface in one embodiment of the present invention;

FIG. 3 is a block diagram of a programmable packet switching controller in one embodiment of the present invention;

FIG. 4 is a block diagram of a packet switching controller with programmable disposition logic in one embodiment of the present invention;

FIG. 5 is a flow diagram of a process of programmatically generating a disposition decision using multiple disposition recommendations and classification information in one embodiment of the present invention;

FIG. 6 is a block diagram illustrating the process of marking packets into different classifications.

FIG. 7 is a policing data table used for policing data packets based on multiple policy levels in one embodiment of the present invention;

FIG. 8 is a flow diagram of multi-level policing process in one embodiment of the present invention; and

FIG. 9 is a block diagram of a packet switching controller having flow rate policing with deferred debiting in one embodiment of the present invention.

DETAILED DESCRIPTION

I. Overview

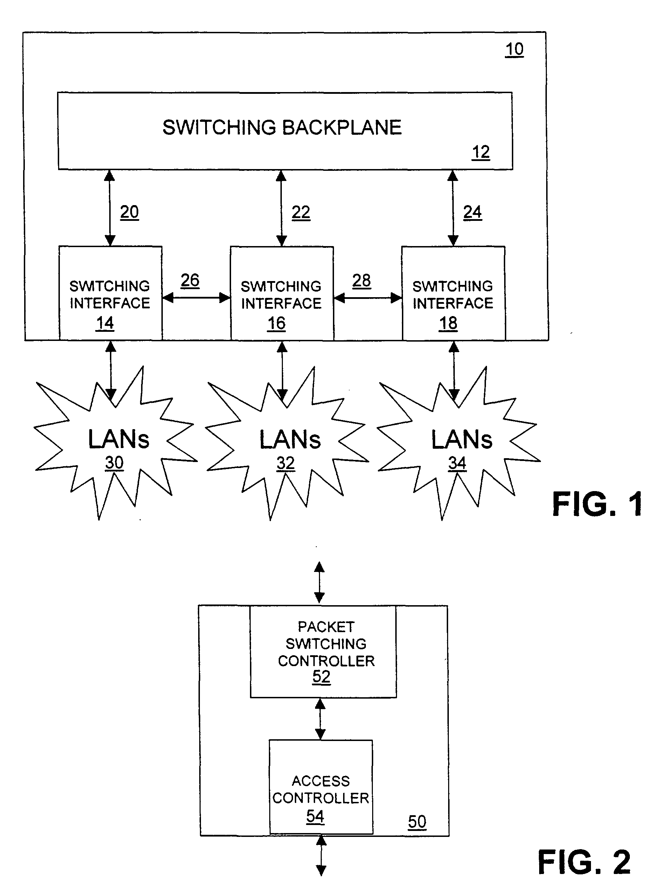

In FIG. 1, network environment including a packet switching node 10 is illustrated. The packet switching node may also be referred to as a switch, a data communication node or a data communication switch. The packet switching node 10 includes switching interfaces 14, 16 and 18 interconnected to respective groups of LANs 30, 32, 34, and interconnected to one another over data paths 20, 22, 24 via switching backplane 12. The switching backplane 12 preferably includes switching fabric. The switching interfaces may also be coupled to one another over control paths 26 and 28.

The switching interfaces 14, 16, 18 preferably forward packets to and from their respective groups of LANs 30, 32, 34 in accordance with one or more operative communication protocols, such as, for example, media access control (MAC) bridging and Internet Protocol (IP) routing. The switching node 10 is shown for illustrative purposes only. In practice, packet switching nodes may include more or less than three switching interfaces.

FIG. 2 is a block diagram of a switching interface 50 in one embodiment of the present invention. The switching interface 50 may be similar, for example, to the switching interfaces 14, 16, 18 of FIG. 1. The switching interface 50 includes an access controller 54 coupled between LANs and a packet switching controller 52. The access controller 54, which may, for example, include a media access controller (MAC), preferably receives inbound packets off LANs, performs flow-independent physical and MAC layer operations on the inbound packets and transmits the inbound packets to the packet switching controller 52 for flow-dependent processing. The access controller 54 preferably also receives outbound packets from the packet switching controller 52 and transmits the packets on LANs. The access controller 54 may also perform physical and MAC layer operations on the outbound packets prior to transmitting them on LANs.

The packet switching controller 52 preferably is programmable for handling packets having wide variety of communications protocols. The packet switching controller 52 preferably receives inbound packets, classifies the packets, modifies the packets in accordance with flow information and transmits the modified packets on switching backplane, such as the switching backplane 12 of FIG. 1. The packet switching controller 52 preferably also receives packets modified by other packet switching controllers via the switching backplane and transmits them to the access controller 54 for forwarding on LANs. The packet switching controller 52 may also subject selected ones of the packets to egress processing prior to transmitting them to the access controller 54 for forwarding on LANs.

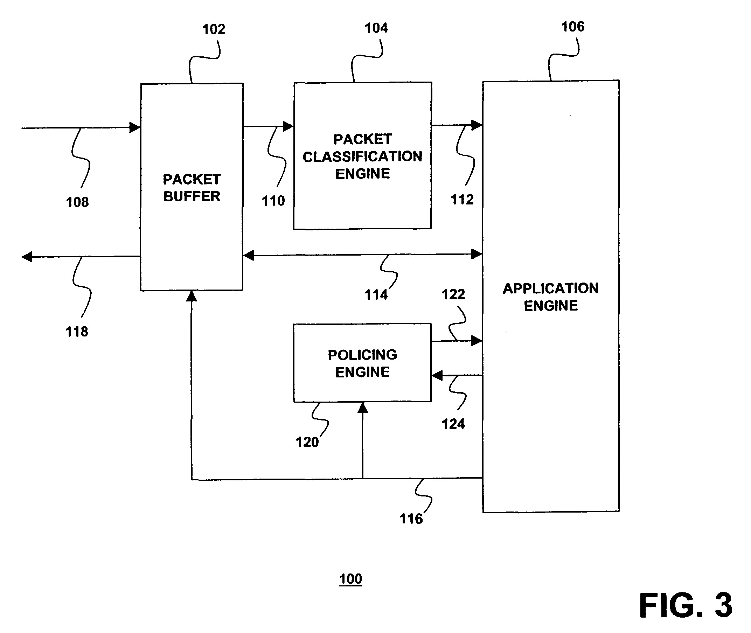

FIG. 3 is a block diagram of a programmable packet switching controller 100 in one embodiment of the present invention. The programmable packet switching controller 100, for example, may be similar to the packet switching controller 52 of FIG. 2. The programmable packet switching controller 100 preferably has flow resolution logic for classifying and routing incoming flows of packets. Due to its programmable nature, the programmable packet switching controller preferably provides flexibility in handling many different protocols and/or field upgradeability. The programmable packet switching controller may also be referred to as a packet switching controller, a switching controller, a programmable packet processor, a network processor, a communications processor or as another designation commonly used by those skilled in the art.

The programmable packet switching controller 100 includes a packet buffer 102, a packet classification engine 104, an application engine 106 and a policing engine 120. The policing engine may also be referred to as a policing element. Packet switching controllers in other embodiments may include more or less components. For example, a packet switching controller in another embodiment may include a pattern match module for comparing packet portions against a predetermined pattern to look for a match. The packet switching controller in yet another embodiment may include an edit module for editing inbound packets to generate outbound packets.

The programmable packet switching controller 100 preferably receives inbound packets 108. The packets may include, but are not limited to, Ethernet frames, ATM cells, TCP/IP and/or UDP/IP packets, and may also include other Layer 2 (Data Link/MAC Layer), Layer 3 (Network Layer) or Layer 4 (Transport Layer) data units. For example, the packet buffer 102 may receive inbound packets from one or more Media Access Control (MAC) Layer interfaces over the Ethernet.

The received packets preferably are stored in the packet buffer 102. The packet buffer 102 may include a packet FIFO for receiving and temporarily storing the packets. The packet buffer 102 preferably provides the stored packets or portions thereof to the packet classification engine 104 and the application engine 106 for processing.

The packet buffer 102 may also include an edit module for editing the packets prior to forwarding them out of the switching controller as outbound packets 118. The edit module may include an edit program construction engine for creating edit programs real-time and/or an edit engine for modifying the packets. The application engine 106 preferably provides application data 116, which may include a disposition decision for the packet, to the packet buffer 102, and the edit program construction engine preferably uses the application data to create the edit programs. The outbound packets 118 may be transmitted over a switching fabric interface to communication networks, such as, for example, the Ethernet.

The packet buffer 102 may also include either or both a header data extractor and a header data cache. The header data extractor preferably is used to extract one or more fields from the packets, and to store the extracted fields in the header data cache as extracted header data. The extracted header data may include, but are not limited to, some or all of the packet header. In an Ethernet system, for example, the header data cache may also store first N bytes of each frame.

The extracted header data preferably is provided in an output signal 110 to the packet classification engine 104 for processing. The application engine may also request and receive the extracted header data over an interface 114. The extracted header data may include, but are not limited to, one or more of Layer 2 MAC addresses, 802.1P/Q tag status, Layer 2 encapsulation type, Layer 3 protocol type, Layer 3 addresses, ToS (type of service) values and Layer 4 port numbers. In other embodiments, the output signal 110 may include the whole inbound packet, instead of or in addition to the extracted header data. In still other embodiments, the packet classification engine 104 may be used to edit the extracted header data to be placed in a format suitable for use by the application engine, and/or to load data into the header data cache.

The packet classification engine 104 preferably includes a programmable microcode-driven embedded processing engine. The packet classification engine 104 preferably is coupled to an instruction RAM (IRAM) (not shown). The packet classification engine preferably reads and executes instructions stored in the IRAM. In one embodiment, many of the instructions executed by the packet classification engine are conditional jumps. In this embodiment, the classification logic includes a decision tree with leaves at the end points that preferably indicate different types of packet classifications. Further, branches of the decision tree preferably are selected based on comparisons between the conditions of the instructions and the header fields stored in the header data cache. In other embodiments, the classification logic may not be based on a decision tree.

In one embodiment of the present invention, the application engine 106 preferably has a pipelined architecture wherein multiple programmable sub-engines are pipelined in series. Each programmable sub-engine preferably performs an action on the packet, and preferably forwards the packet to the next programmable sub-engine in a "bucket brigade" fashion. The packet classification engine preferably starts the pipelined packet processing by starting the first programmable sub-engine in the application engine using a start signal 112. The start signal 112 may include identification of one or more programs to be executed in the application engine 106. The start signal 112 may also include packet classification information. The programmable sub-engines in the application engine preferably have direct access to the header data and the extracted fields stored in the header data cache over the interface 114.

The application engine may include other processing stages not performed by the programmable sub-engines, however, the decision-making stages preferably are performed by the programmable sub-engines to increase flexibility. In other embodiments, the application engine may include other processing architectures.

The disposition decision included in the application data 116 preferably is also provided to the policing engine 120. The policing engine 120 preferably also receives one or more policing IDs 124. The policing engine 120 preferably uses the disposition decision and the policing IDs to generate one or more policing recommendations 122. The policing recommendations may be a type of disposition recommendation, and may also be referred to as policing results. The policing recommendations preferably are provided to the application engine 106 to be used together with other disposition recommendations to generate application data, which may include the disposition decision.

II. Programmable Disposition Logic

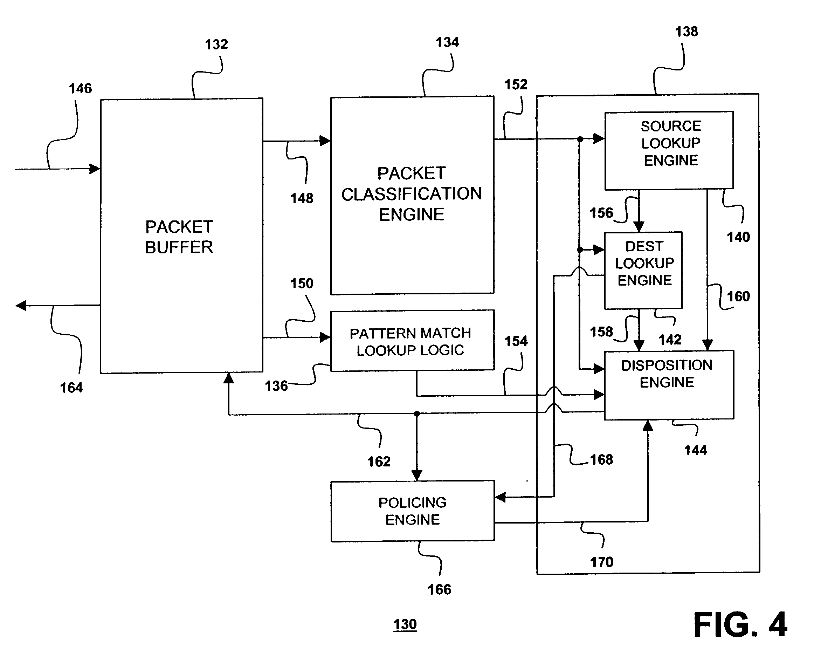

FIG. 4 is a block diagram of a packet switching controller 130 with programmable disposition logic. The packet switching controller 130 may be similar, for example, to the packet switching controller 100 of FIG. 3. The packet switching controller includes a packet buffer 132, a packet classification engine 134, a pattern match lookup logic 136, an application engine 138 and a policing engine 166.

The application engine includes a source lookup engine 140, a destination lookup engine 142 and a disposition engine 144. The packet classification engine, the source lookup engine, the destination lookup engine and the disposition engine preferably are programmable with one or more application programs. In other words, each of the packet classification engine and the sub-engines of the application engine preferably includes a programmable microcode-driven embedded processing engine. In other embodiments, one or more of these engines may be implemented in hardware, i.e., as hardwired logic. The policing engine 166 may be implemented in hardwired logic or in programmable microcode-driven embedded processing engine.

The packet buffer 132 preferably receives and stores inbound packets 146. The packet buffer preferably provides the inbound packets or portions thereof 148 to the packet classification engine 134. The packet classification engine preferably classifies the packets using its application programs programmed thereon, and preferably provides a program identification 152 to the application engine 138. More particularly, the program identification 152 preferably is provided to the source lookup engine 140, the destination lookup engine 142 and the disposition engine 144 in the application engine. In one embodiment of the present invention, the packet classification engine 134 includes a decision tree-based classification logic.

The program identification 152 preferably is used to select application programs to be executed in each of the source lookup engine, the destination lookup engine and the disposition engine. The application programs to be executed in the source lookup engine, the destination lookup engine and the disposition engine preferably are selected based at least partly on packet classification information. The packet classification information may also be provided together with the program identification.

The packet buffer preferably also provides the inbound packets or portions thereof 150 to the pattern match lookup logic 136. The pattern match lookup logic preferably includes a predefined pattern against which the packets or the packet portions are compared. For example, the packet portions used for pattern matching may include portions of packet header data, packet payload data, or both the packet header data and the packet payload data. In other embodiments, the predefined pattern may reside in an external memory, which is accessed by the pattern match lookup logic for pattern matching. In still other embodiments, the match pattern may change during the operation of the packet switching controller.

After a comparison is made, a result 154 of the comparison preferably is provided to the application engine 138. More particularly, the result 154 of the comparison preferably is provided to the disposition engine 144 in the application engine. In some embodiments, the result may be provided to the disposition engine only when there is a match.

The source lookup engine 140 preferably generates a disposition recommendation 160 for an inbound packet at least partly by performing a source address lookup using a source address of the inbound packet. The disposition recommendation 160 preferably also depends on the application program executed in the source lookup engine 140 in accordance with the program identification provided by the packet classification engine. The disposition recommendation 160 preferably includes a security recommendation for the inbound packet.

In other embodiments, the source lookup engine 140 may be used to build one or more keys, which may then be used to look up the source address (e.g., IPSA) of the inbound packet in an address table. The keys may include, but are not limited to, one or more of Virtual LAN Identification (VLAN ID), application identification (APP ID) and IPSA. One or more keys built by the source lookup engine 140 may also be used to formulate a disposition recommendation, such as, for example, the security recommendation.

The destination lookup engine 142 preferably receives an output 156 from the source lookup engine 140. The output 156 may include the key used to look up the source address and/or the result of the lookup. The destination lookup engine preferably executes its application program identified by the packet classification engine 134 and generates one or more police identifiers (IDs) 168. The police IDs 168 may be based at least partly on destination address lookup using a destination address of the inbound packet.

The policing engine 166 preferably uses the police IDs 168 as keys to access policing data in a policing data table. The policing engine 166 preferably uses the accessed policing data to generate one or more policing recommendations 170. The policing recommendations preferably are used by the disposition engine along with other disposition recommendations to generate application data, which may include the disposition decision. When the pattern match lookup logic 136 finds a match, the pattern match result 154 preferably overrides the policing recommendations. The policing recommendations preferably are used to generate a single recommendation by selecting the worst case policing recommendation. The policing engine may also perform accounting functions.

In other embodiments, the destination lookup engine 142 may be used to build one or more keys, which may then be used to look up the destination address (e.g., IPDA) of the inbound packet in an address table. The keys may include, but are not limited to, one or more of Virtual LAN Identification (VLAN ID), application identification (APP ID) and IPDA.

The disposition engine 144 preferably receives a number of disposition recommendations including, but not limited to, the security recommendation in the disposition recommendation 160, the policing recommendation 170, and the pattern match result 154. The disposition engine preferably generates a disposition decision 162 based on the disposition recommendations as well as the packet classification and/or program identification. The disposition decision 162 may include one of the disposition recommendations. In general, the pattern match result 154 may override the policing recommendation 170, and the policing recommendation may override the security recommendation in the disposition recommendation 160. The disposition decision 162 may be a part of application data, which may include, but is not limited to, one or more of accounting data, routing data and policing data.

The disposition decision preferably is provided to the packet buffer to be used for editing the inbound packets to be provided as outbound packets 164. The disposition decision preferably is also fed back to the policing engine for policing and accounting. For example, when the inbound packet is dropped, the policing engine should be made aware of that fact. In other embodiments, the destination lookup engine may include the policing engine. In such cases, the disposition decision preferably is provided to the destination lookup engine for policing and accounting.

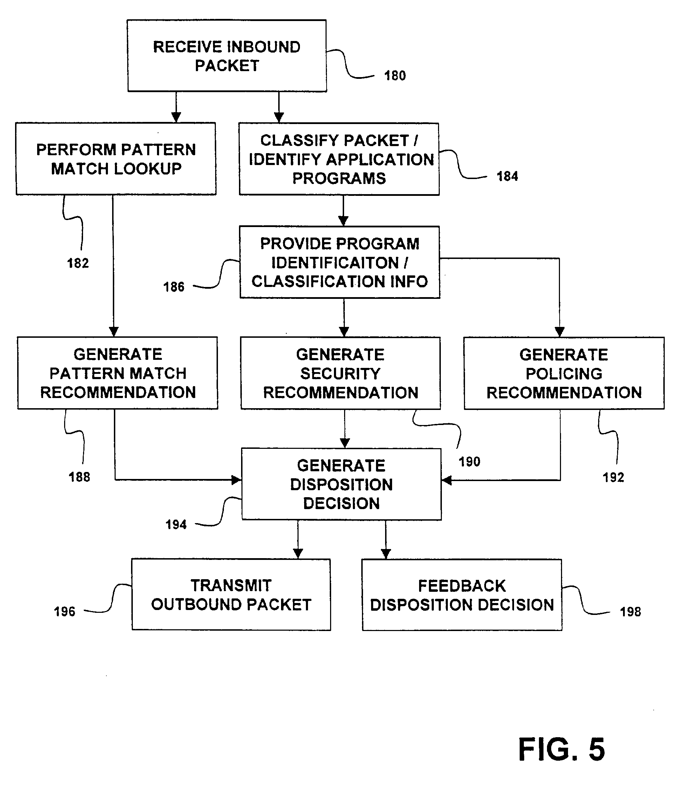

FIG. 5 is a flow diagram of a process of programmatically generating a disposition decision using multiple disposition recommendations and classification information. In step 180, a packet buffer, such as, for example, the packet buffer 132 of FIG. 4, preferably receives an inbound packet. In the packet buffer, packet header data may be extracted and stored in a header data cache.

The inbound packet or a portion of the inbound packet, which may include the header data, preferably is provided to a pattern match lookup logic, such as, for example, the pattern match lookup logic 136 of FIG. 4. In step 182, the pattern match lookup logic preferably performs a pattern match lookup between the inbound packet or the portion of the inbound packet and a predetermined pattern to generate a pattern match recommendation as indicated in step 188. The predetermined pattern, for example, may be contained in an internal or external memory. In other embodiments, the match pattern may change dynamically.

Meanwhile, the inbound packet or a portion thereof preferably is also provided to a packet classification engine, such as, for example, the packet classification engine 134 of FIG. 4. In step 184, the packet classification engine preferably classifies the packet and preferably identifies application programs based on the packet classification. In step 186, the program identification preferably is provided to a source lookup engine, a destination lookup engine and a disposition engine in an application engine, such as, for example, the application engine 138 of FIG. 4. The program identification preferably indicates application programs to be executed in these sub-engines. The packet classification information preferably is also provided to the source lookup engine, the destination lookup engine and the disposition engine. The source lookup engine preferably generates a security recommendation in step 190, while the policing engine preferably generates a policing recommendation in step 192 using police IDs from the destination lookup engine.

In step 194, the pattern match recommendation, the security recommendation and the policing recommendation preferably are provided to the disposition engine. The disposition engine preferably generates a disposition decision using one or more of the selected application program and the disposition recommendations. The disposition decision preferably is provided to the packet buffer to be used for editing and transmission of the inbound packet as an outbound packet in step 196. In step 198, the disposition decision preferably is also fed back to the policing engine for operations such as, for example, policing and accounting.

III. Multi-Level Policing

In one embodiment of the present invention, the policing engine preferably employs multi-level policing logic for policing the traffic flowing through the packet switching controller based on multiple policy groups. A customer preferably specifies the applicable policy groups and bandwidths applicable to those groups in her bandwidth contract. In an exemplary scenario, the customer may specify in her bandwidth contract that she will pay for 1 Gbps of data traffic on a particular port. The customer may further assign different data flow limits to the subnets in her company. For example, the customer may limit the engineering subnet to 300 Mbps and the accounting subnet to 100 Mbps. Furthermore, the customer may specify that web traffic is to be limited to 200 Mbps for the entire company. Thus, instead of policing the traffic solely on a per-port basis with no regard to the type of traffic, web traffic and traffic originating from the engineering or accounting subnets may be identified and policed based on their respective thresholds.

Further, a bandwidth contract between service provider and customer may also determine QoS actions. The QoS actions preferably identify QoS applicable to the traffic meeting the flow conditions. The QoS actions may indicate a maximum bandwidth, minimum bandwidth, peak bandwidth, priority, latency, jitter, maximum queue depth, maximum queue buffers, and the like.

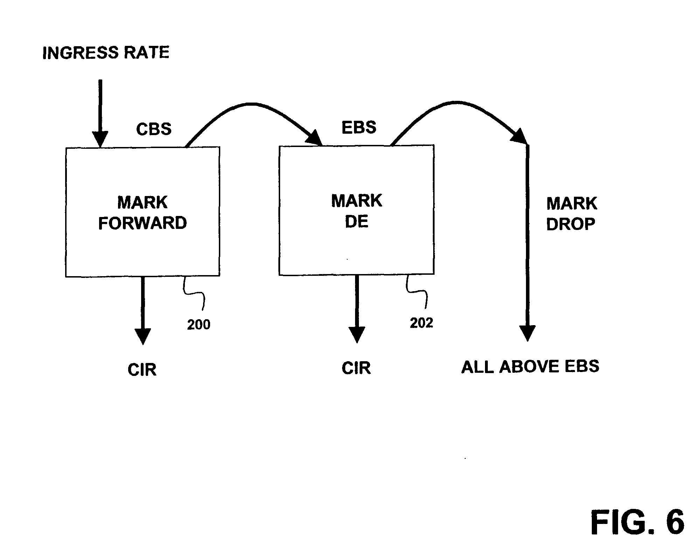

The bandwidth policing function preferably controls the ingress data rate on a per-flow bases as part of a general solution to limit, e.g., police, and shape traffic flows. FIG. 6 is a block diagram illustrating policing of different flows. The policing parameters preferably are established by defining a Committed Information Rate (CIR) in units of bytes per time along with a Committed Burst Size (CBS) and Excess Burst Size (EBS) both in units of bytes. The packets preferably are classified, i.e., marked, into a first bucket (Drop Eligible (DE) bucket) 200 and a second bucket (Drop bucket) 202.

As packets are presented at a given ingress rate, they preferably are marked according to a current balance within each bucket and its relationship to the CBS and EBS. The first bucket preferably maintains a Discard Eligible (DE) balance. The second bucket preferably maintains a Drop balance. If the ingress rate is less than the CBS, the packets preferably are marked as Forward. If the ingress rate is greater than or equal to the CBS but below the EBS, packets preferably are marked as DE. If the ingress rate is greater than or equal to the EBS, packets preferably are marked as Drop.

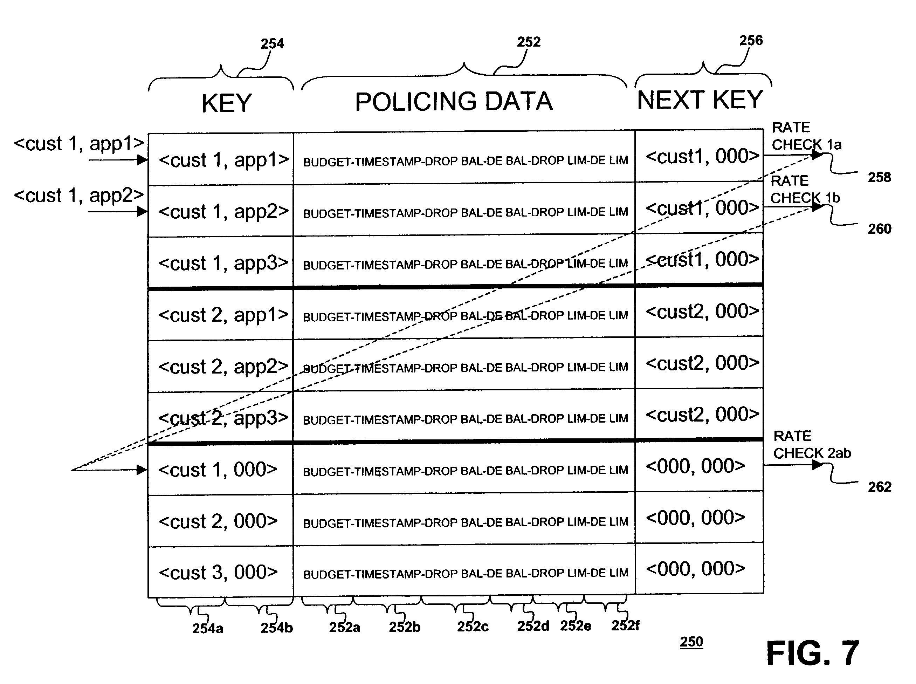

FIG. 7 is a policing data table 250 used for policing data packets based on multiple policy levels in one embodiment of the present invention. The policing data table 250 may be stored in a policing engine, which may be similar to the policing engine 166 of FIG. 4. The policing data table 250 may also be referred to as a policing database.

The policing data table 250 includes policing data for performing checks of the current rate of traffic flowing through a packet switching controller, such as, for example, the packet switching controller 130 of FIG. 4. The policing data table 250 may be arranged in a variety of ways, but preferably is configured as sequential entries, with each entry providing policing data 252 that is associated with a particular policy group. Each policing data 252 preferably is identified by a unique police identifier (ID)/key 254.

The police ID 254 preferably identifies different policy groups to which the packet may be classified. Preferably, each police ID 254 is composed of a customer identifier 254a and/or an application identifier 254b. The customer identifier preferably identifies a particular customer based on source address, physical port, or the like. The application identifier 254b preferably is an internal identifier assigned by an application RAM based on the type of application associated with the packet. Exemplary applications include web applications, Voice over IP (VoIP) applications, and the like.

A next police ID 256 preferably allows nested lookups in the policing database to identify additional policy groups applicable to the packet. The policing data 252 associated with those policy groups preferably are also retrieved for performing a rate check for the current packet.

Each policing data 252 preferably depicts the current bandwidth as well as the bandwidth limits of each policy group identified by the police ID 254. A Drop balance 252c and a Drop Eligible (DE) balance 252d preferably maintain counts of the amount of traffic flowing through the packet switching controller. The Drop and DE balances 252c, 252d preferably are respectively compared against a Drop and DE limits 252e, 252f for recommending that the current packet be forwarded, forwarded with a DE marking, or dropped immediately. The Drop balance 252c preferably is not incremented until the DE balance 252d is greater than a DE limit 252f.

Each policing data 252 preferably further includes a timestamp 252b indicative of a time at which a last balance calculation was done. Given a current time and the timestamp information, an elapsed time from the last balance calculation may be measured for calculating a rate of traffic during this time. The size of the timestamp increments may be adjusted based on a budget (CIR) 252a value also maintained in the policing data table 250. For example, the budget value may be defined as bytes per timestamp increment in one embodiment of the present invention.

In the illustrated policing data table 250, the policing engine preferably performs a rate check 258 or 260 based on a first police ID to produce a first policy result indicating the recommended disposition of the packet. The policing engine preferably further determines if the packet is to be policed based on additional policy groups. In doing so, the policy engine preferably examines the next police ID field 256 and retrieves the policing data identified by the ID. A second rate check 262 preferably is then performed on the same packet to produce a second policy result based on the second rate check. Additional rate checks may continue to be performed based on values on the next policy ID field 256. In one embodiment of the present invention, up to four policing algorithms may be executed for each packet while maintaining line rate performance. In other embodiments, more or less than four policing algorithms may be executed.

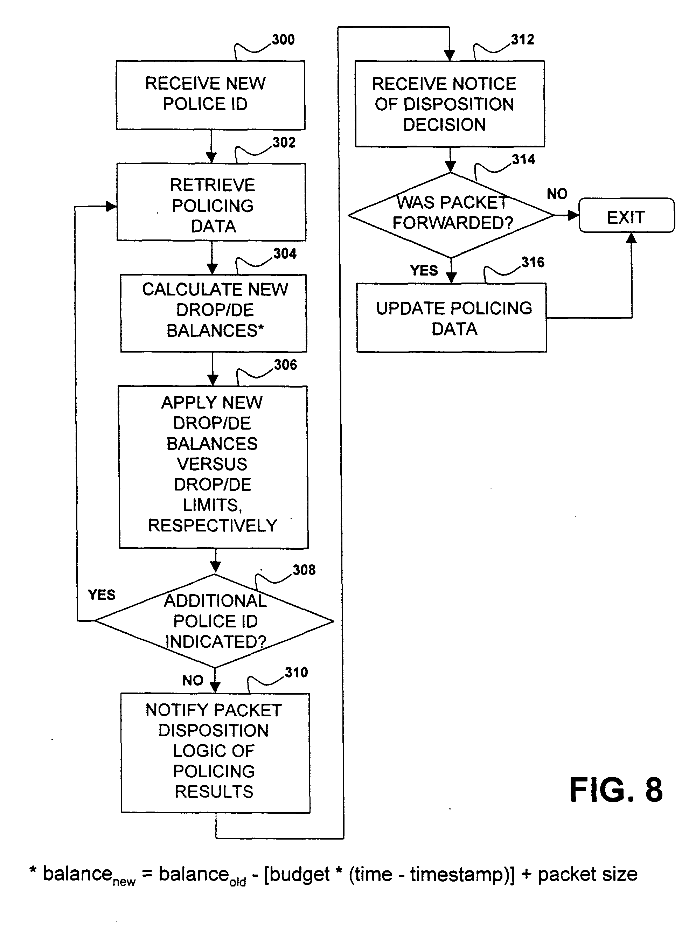

FIG. 8 is an exemplary flow diagram of a multi-level policing process. The process starts, and in step 300, the policing engine preferably receives a new police ID for an incoming packet. In step 302 the policing engine preferably retrieves the policing data associated with the police ID. In step 304, the policing engine preferably calculates a new Drop or DE balance, preferably according to the following formula:

$$Balance_{new} = Balance_{old} - [budget*(time-timestamp)] + packetsize$$

In the formula, $Balance_{new}$ and $Balance_{old}$ preferably represent new and current balances, respectively, for either the Drop bucket or DE bucket associated with the police ID. Budget preferably represents budget 252a, e.g., CIR, associated with the police ID. The current Drop and DE balances correspond to DROP BAL 252c and DE BAL 252d, respectively. Time and timestamp, respectively, preferably represent current time and timestamp 252b associated with the police ID. Packetsize preferably represents size of the packet being processed.

In step 306, the new Drop balance or DE balance is applied towards the Drop limit 252e or DE limit 252f. The balance preferably is applied towards the DE balance until the DE limit has been exceeded. The policing engine preferably compares the DE balance against the DE limit and preferably determines that the packet is to be forwarded if the DE balance is less than the DE limit. If the DE balance exceeds the DE limit, the balance preferably is applied towards the Drop balance. The policing engine preferably then compares the Drop balance against the Drop limit, and preferably determines that the packet is to be forwarded with a DE marking if the Drop balance is less than the Drop limit. However, if the Drop limit has been exceeded, the policing engine preferably determines that the packet is to be discarded immediately.

For example, in practice, the new balances preferably are calculated and then compared against the DE and Drop limits to determine forwarding status. The balances preferably are updated based on the forwarding result. For example, if the packet is marked Forward, the DE balance preferably is updated. In other words, when the packet is marked Forward, the DE bucket, such as, for example, the first bucket 200 of FIG. 6, preferably is filled. For further example, if the packet is marked DE, the Drop balance preferably is updated. In other words, when the packet is marked DE, the Drop bucket, such as, for example, the second bucket 202 of FIG. 6, is filled. At this point, the DE bucket is already full. For still further example, if the packet is marked Drop, neither the DE balance nor the Drop balance is updated since both buckets are full at this point.

In step 308, a determination is made as to whether there are additional police IDs indicated for the current packet. If there are, the process returns to step 302 to retrieve the policing data identified by the additional police IDs and to produce additional policy results.

In step 310, the policing engine preferably notifies a disposition engine, such as, for example, the disposition engine 144 of FIG. 4, of the policing results, which may also be referred to as policing recommendations. In the event that multiple policy results are available for the packet being processed, the policing engine preferably selects the most conservative policing result, i.e., worst case policing result, and preferably returns that result to the disposition engine. The disposition engine preferably uses the police results and other disposition recommendations, e.g., security recommendation and pattern match result, to generate a disposition decision.

In step 312, the policing engine preferably receives notice from the disposition engine of the disposition decision. The disposition decision may include the decision on whether the packet was forwarded, forwarded with a DE marking, or dropped. In step 314, the policing engine preferably determines whether the packet was forwarded. If it was, each policing data associated with the forwarded packet is updated in step 316 to reflect an increased traffic.

The values updated in the police database preferably include one or more of the DE balance, the Drop balance and the timestamp. The DE balance preferably is updated if it is less than the DE limit. The Drop balance preferably is updated if the DE balance is greater than the DE limit and the Drop balance is less than the Drop limit. If both balances are over their respective limits, then preferably neither is updated. In any case, it is desirable to not add the 'packetsize' (size of the packet) value to either balance if the packet, e.g., frame, is dropped for any reason as indicated by the disposition decision, for example. This way, an accurate count preferably is made of the packets coming into the switching fabric.

IV. Flow Rate Policing with Deferred Debiting

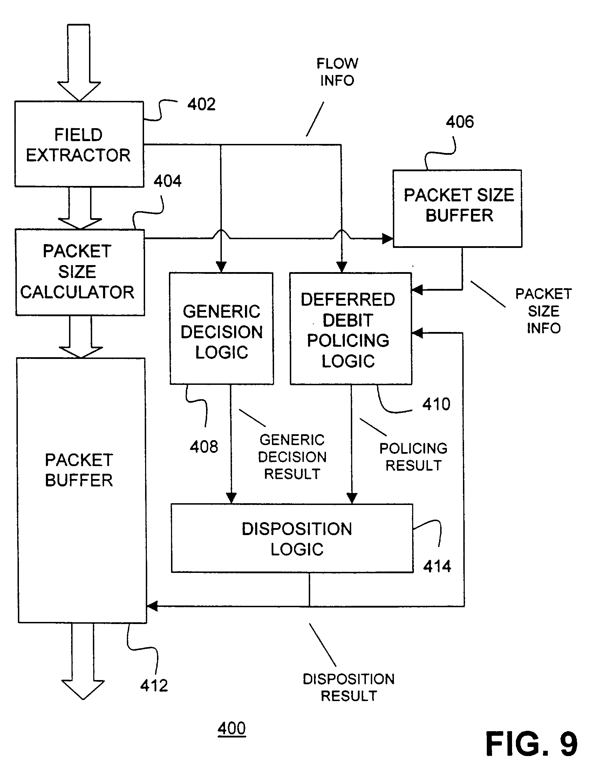

In one embodiment of the present invention, deferred debiting preferably is used with flow rate policing. FIG. 9 is a block diagram 400 of a packet switching controller having flow rate policing with deferred debiting in this embodiment of the present invention. The deferred debiting may be used in conjunction with the multi-level policing logic.

As shown in FIG. 9, a field extractor 402 receives packets, provides flow information to generic decision logic 408 and deferred debit policing logic 410, and provides the packet to a packet size calculator 404. The packet size calculator 404 provides output to a packet size buffer 406 and provides the packet to a packet buffer 412. The generic decision logic 408 and the deferred debit policing logic 410, respectively, provide a generic decision result and a policing result to disposition logic 414, which provides a disposition result to the packet buffer 412. The disposition logic 414 also provides the disposition result to the deferred debit policing logic 410, which uses the disposition result and the packet size information for deferred debiting.

Flow rate policing has become increasingly important in data communication networking as customers entitled to different qualities of service compete for shared network bandwidth. Flow rate policing typically involves comparing packets within a flow against one or more bandwidth contracts defined for the flow to resolve whether to: (i) admit the packet without conditions; (ii) admit the packet with conditions (e.g. mark the packet discard eligible); or (iii) discard the packet.

Flow rate policing schemes typically maintain a "token bucket" to express the currently available bandwidth under each bandwidth contract. Typically, a packet is deemed to be within a flow's bandwidth contract if there are presently enough tokens in the bucket maintained for the contract; a packet is deemed to exceed the contract if there are not presently enough tokens in the bucket maintained for the contract. Tokens are added to the bucket as time elapses via time credits; tokens are subtracted from the bucket as packets are admitted via packet size debits.

A common expression used to maintain token bucket state is:

$$TC_{new} = TC_{old} + C - D$$

where

$TC_{new}$ = new token count
$TC_{old}$ = old token count
C = time credit
D = size debit

A single instance of the token bucket state expression may be applied to effectuate simple admit/discard policing decisions as follows. When a packet within a flow arrives for a policing decision, a new token count $TC_{new}$ for the flow's bandwidth contract is calculated by adding a time credit C reflecting the elapsed time since the policing decision on the previous packet and by subtracting a size debit D reflecting the size of the current packet. The new token count $TC_{new}$ for the flow's bandwidth contract is then compared with zero. If the new token count $TC_{new}$ is greater than or equal to zero, the current packet is within the bandwidth contract and is admitted. If the new token count $TC_{new}$ is less than zero, the current packet exceeds the bandwidth contract and is discarded.

Two instances of the token bucket state expression may be applied to the same flow to provide more sophisticated policing decisions. For instance, a discard token bucket and a discard eligible token bucket may be separately maintained for a flow. In that event, if the new discard token count $TC_{new-de}$ is greater than or equal to zero but the new discard token count $TC_{new-d}$ is less than zero, the current packet is within the discard bandwidth contract but exceeds the discard eligible bandwidth contract. Accordingly, the current packet is admitted (since it is within the drop bandwidth contract) subject to the condition that it be marked as discard eligible (since it exceeds the discard eligible bandwidth contract). Such a three-level "dual token bucket" policing scheme is described in IETF Request for Comment 2697 entitled "A Single Rate Three Color Marker".

Applying the token bucket state expression to police high speed data flows in state of the art packet switching controllers has met with some practical difficulty, particularly with regard to the teaching to subtract the size debit D reflecting the size of the current packet prior to making the policing decision. First, the current packet's size may be determined external to the policing logic. Thus, the size debit D for the current packet may not be available at the time the policing decision is made. Second, the policing decision alone may not dictate the final disposition of the packet. Thus, deduction of the size debit D for the current packet may require later reversal. Third, the size debit D for the current packet, if deducted prior to making the policing decision, will result in the current packet being found to exceed a bandwidth contract even though there are enough tokens in the bucket to accommodate most (but not all) of the packet.

On the other hand, the practical benefit of deducting the size debit D for the current packet prior to making the policing decision is not clear, since in high speed controllers the data transfer rate is exponentially larger than the maximum packet size. At most a nominal and temporary violation of the bandwidth contract for a flow will occur as long as the size debit D is made within a reasonable time thereafter.

In this embodiment of the present invention, deferred debiting preferably is used to overcome the above difficulties in applying the common token bucket state expression to police high speed data flows.

For example, a data policing method may be provided. The data policing method preferably includes: receiving a packet; adding a time credit to a first token count to generate a second token count; applying the second token count

**EP 1 158 728 A2**

to generate a policing result for the packet; and applying the policing result for the packet to subtract or not a size debit from the second token count to generate or not, respectively, a third token count.

The data policing method may further comprise: receiving a second packet; adding a time credit to the second token count to generate a fourth token count; and applying the fourth token count to generate a policing result for the second packet.

Another data policing method may also be provided. This data policing method preferably includes: receiving a packet; adding a time credit to a first token count to generate a second token count; applying the second token count to generate a policing result for the packet; applying the policing result for the packet to generate a disposition result for the packet; and applying the disposition result for the packet to subtract or not a size debit from the second token count to generate or not, respectively, a third token count.

In this data policing method, the police result may be applied as a recommendation with at least one other recommendation to generate the disposition result for the packet.

Yet another data policing method preferably includes: receiving a packet; adding a time credit to ones of token counts to generate respective ones of second token counts; applying the ones of second token counts to generate a policing result for the packet; and applying the policing result for the packet to subtract or not a size debit from at least one of the second token counts to generate or not, respectively, at least one third token count.

Still another data policing method preferably includes: receiving a packet; adding a time credit to ones of token counts to generate respective ones of second token counts; applying the ones of second token counts to generate a policing result for the packet; applying the policing result for the packet to generate a disposition result for the packet; and applying the disposition result for the packet to subtract or not a size debit from at least one of the second token counts to generate or not, respectively, at least one third token count.

The following data policing methods further illustrate flow rate policing with deferred debiting in one embodiment of the present invention.

A data policing method preferably includes: receiving a packet; adding a time credit to a first token count to generate a second token count; applying the second token count to generate a policing result for the packet; and applying the policing result to subtract or not a size debit from the second token count to generate or not, respectively, a third token count.

The data policing method preferably further includes: receiving a second packet; adding a time credit to the second token count to generate a fourth token count; and applying the fourth token count to generate a policing result for the second packet.

Another data policing method preferably includes: receiving a packet; adding a time credit to a first token count to generate a second token count; applying the second token count to generate a policing result for the packet; applying the policing result to generate a disposition result for the packet; and applying the disposition result to subtract or not a size debit from the second token count to generate or not, respectively, a third token count. The police result may be applied as a recommendation with at least one other recommendation to generate the disposition result.

Yet another data policing method preferably includes: receiving a packet; adding a time credit to ones of token counts to generate respective ones of second token counts; applying the ones of second token counts to generate a policing result for the packet; and applying the policing result to subtract or not a size debit from at least one of the second token counts to generate or not, respectively, at least one third token count.

Still another data policing method preferably includes: receiving a packet; adding a time credit to ones of token counts to generate respective ones of second token counts; applying the ones of second token counts to generate a policing result for the packet; applying the policing result to generate a disposition result for the packet; and applying the disposition result to subtract or not a size debit from at least one of the second token counts to generate or not, respectively, at least one third token count.

Although this invention has been described in certain specific embodiments, those skilled in the art will have no difficulty devising variations which in no way depart from the scope and spirit of the present invention. It is therefore to be understood that this invention may be practiced otherwise than is specifically described. Thus, the present embodiments of the invention should be considered in all respects as illustrative and not restrictive, the scope of the invention to be indicated by the appended claims and their equivalents rather than the foregoing description.

**Claims**

**1.** A packet switching controller comprising:

an input for receiving a packet;
a policing element for classifying the packet into a plurality of policeable groups,

wherein the packet is compared against one or more bandwidth contracts defined for the policeable groups to produce one or more policing results.

2. The packet switching controller of claim 1 wherein the policing element includes a policing database, a first policeable group identifier is applied to the policing database to retrieve first policing data and a second policeable group identifier, the first policing data is applied to produce a first policing result, the second policeable group identifier is applied to the policing database to retrieve second policing data, and the second policing data is applied to produce a second policing result.

3. The packet switching controller of claim 1 further comprising a disposition engine for making a disposition decision for the packet, wherein the policing results include one or more disposition recommendations, and the disposition engine uses the policing results and at least one other disposition recommendation to make the disposition decision for the packet.

4. The packet switching controller of claim 1 wherein the policing results are combined into a single result by taking a worst case policing result.

5. A method of processing a packet using a policing element, the method comprising the steps of:

   receiving the packet;
   classifying the packet into a plurality of policeable groups; and
   comparing the packet against one or more bandwidth contracts defined for the policeable groups to produce one or more policing results.

6. The method of processing a packet of claim 5 wherein the policing element includes a policing database, and the method further comprises the steps of:

   applying a first policeable group identifier to the policing database to retrieve first policing data and a second policeable group identifier;
   producing a first policing result using the first policing data;
   applying the second policeable group identifier to the policing database to retrieve second policing data; and
   producing a second policing result using the second policing data.

7. The method of processing a packet of claim 5 wherein the policing results include one or more disposition recommendations, and the method further comprises the step of making a disposition decision for the packet using the policing results and at least one other disposition recommendation.

8. The method of processing a packet of claim 5 further comprising the step of combining the policing results into a single result by taking a worst case policing result.

9. A method for policing a data packet received by a data communication switch, the method comprising:

   classifying the data packet into a plurality of policeable groups;
   identifying policing data associated with one or more policeable groups;
   applying the policing data to produce one or more policing results for the policeable groups; and
   recommending a disposition of the data packet from the policing results.

10. The method of claim 9 wherein a particular policeable group identifies a type of application to be policed.

11. The method of claim 9 wherein the policing data includes information on bandwidth constraints specified for at least one policeable group.

12. The method of claim 9 wherein the policing results indicate whether the data packet is to be forwarded.

13. The method of claim 9 wherein the policing results indicate whether the data packet is eligible to be dropped.

14. The method of claim 9 wherein the policing results indicate whether the data packet is to be dropped.

**15.** The method of claim 9 wherein the step of recommending a disposition comprises the step of combining the policing results to make a recommendation.

**16.** The method of claim 9 wherein the step of recommending a disposition comprises selecting one of the policing results as the recommended disposition.

**17.** The method of claim 9 further comprising the step of updating the policing data based on the recommended disposition.

**18.** A method for policing a data packet received by a data communication switch, the method comprising the steps of:

creating a policing database including a plurality of policing data entries specifying policing data for a plurality of policeable groups;
applying a first identifier for retrieving a first policing data associated with a first policeable group and a second identifier identifying a second policeable group;
applying the first policing data to produce a first policing result;
applying the second identifier for retrieving a second policing data;
applying the second policing data to produce a second policing result; and
recommending a disposition of the data packet from the first and second policing results.

**19.** The method of claim 18 wherein a particular policeable group identifies a type of application to be policed.

**20.** The method of claim 18 wherein the policing data includes information on bandwidth constraints specified for the policeable group.

**21.** The method of claim 18 wherein the policing results indicate whether the data packet is to be forwarded.

**22.** The method of claim 18 wherein the policing results indicate whether the data packet is eligible to be dropped.

**23.** The method of claim 18 wherein the policing results indicate whether the data packet is to be dropped.

**24.** The method of claim 18 wherein the step of recommending a disposition comprises the step of combining the first and second policing results to make a recommendation.

**25.** The method of claim 18 wherein the step of recommending a disposition further comprises selecting either the first or second policing result as the recommended disposition.

**26.** The method of claim 18 further comprising the step of updating the first or second policing data based on the recommended disposition.

**27.** A policing engine for a data communication node, wherein the policing engine classifies a packet into a plurality of policeable groups, and wherein the packet is compared for the respective ones of the policeable groups against respective ones of bandwidth contracts to produce respective ones of policing results.

**28.** A policing engine for a data communication node, wherein a first policeable group identifier is applied to a policing database to retrieve first policing data and a second policeable group identifier, wherein the first policing data is applied to produce a first policing result, and the second policeable group identifier is applied to the policing database to retrieve second policing data, wherein the second policing data is applied to produce a second policing result.

**29.** A packet processor comprising:

an input for receiving a packet;
policing means for classifying the packet into a plurality of policeable groups,

wherein the packet is compared against one or more bandwidth contracts defined for the policeable groups to produce one or more policing results.

**30.** The packet processor of claim 29 wherein the policing means include a policing database, a first policeable group identifier is applied to the policing database to retrieve first policing data and a second policeable group identifier, the first policing data is applied to produce a first policing result, the second policeable group identifier is applied to the policing database to retrieve second policing data, and the second policing data is applied to produce a second policing result.

**31.** The packet processor of claim 29 further comprising a disposition means for making a disposition decision for the packet, wherein the policing results include one or more disposition recommendations, and the disposition means use the policing results and at least one other disposition recommendation to make the disposition decision for the packet.

**32.** The packet processor of claim 29 wherein the policing results are combined into a single result by taking a worst case policing result.

**33.** The packet switching controller of claim 1, the packet switching controller further comprising a debiting element, wherein at least one bandwidth contract has an associated token bucket to represent available bandwidth under said bandwidth contract, and the debiting element determines, using the policing results, whether or not to debit the associated token bucket.

**34.** The packet switching controller of claim 3, the packet switching controller further comprising a debiting element, wherein at least one bandwidth contract has an associated token bucket to represent available bandwidth under said bandwidth contract, and the debiting element defers debiting the associated token bucket with the packet size until the disposition engine provides the disposition decision to the debiting element to be used for determining whether or not to debit the associated token bucket.

**35.** The method of processing a packet of claim 5, wherein at least one bandwidth contract has an associated token bucket to represent available bandwidth under said bandwidth contract, and wherein the method further comprises determining, using the policing results, whether or not to debit the associated token bucket.

**36.** The method of processing a packet of claim 7, wherein at least one bandwidth contract has an associated token bucket to represent available bandwidth under said bandwidth contract, and wherein the method further comprises determining, using the disposition decision, whether or not to debit the associated token bucket with the packet size.

**37.** The method for policing a data packet of claim 11, further comprising the steps of:

generating a disposition decision for the data packet using the disposition recommendation from the policing results and at least one other disposition recommendation; and
determining whether or not to update the information on bandwidth constraints using the disposition decision.

**38.** The method for policing a data packet of claim 20, further comprising the steps of:

generating a disposition decision for the data packet using the disposition recommendation from the first and second policing results and at least one other disposition recommendation; and
determining whether or not to update the information on bandwidth constraints using the disposition decision.

**39.** The policing engine of claim 27, wherein whether or not bandwidth available under the bandwidth contracts are updated is determined based on the policing results.

**40.** The packet processor of claim 31, the packet processor further comprising debiting means, wherein at least one bandwidth contract has an associated token bucket to represent available bandwidth under said bandwidth contract, and the debiting means defers debiting the associated token bucket with the packet size until the disposition means provides the disposition decision to the debiting means to be used for determining whether or not to debit the associated token bucket.

**41.** A data policing method, the method comprising the steps of:

receiving a packet;
adding a time credit to a first token count to generate a second token count;

applying the second token count to generate a policing result for the packet;

applying the policing result to determine whether to subtract a size debit from the second token count to generate a third token count or not; and

subtracting the size debit from the second token count to generate a third token count if such subtraction has been determined through applying the policing result.

**42.** The data policing method of claim 41, the method further comprising the steps of:

receiving a second packet;

adding a second time credit to the second token count to generate a fourth token count if the third token count has not been generated;

adding a second time credit to the third token count to generate the fourth token count if the third token count has been generated; and

applying the fourth token count to generate a policing result for the second packet.

**43.** A data policing method, the method comprising the steps of:

receiving a packet;

adding a time credit to a first token count to generate a second token count;

applying the second token count to generate a policing result for the packet;

applying the policing result to generate a disposition result for the packet;

applying the disposition result to determine whether to subtract a size debit from the second token count to generate a third token count or not; and

subtracting the size debit from the second token count to generate the third token count if such subtraction has been determined through applying the disposition result.

**44.** The data policing method of claim 43, wherein the policing result is applied as a recommendation with at least one other recommendation to generate the disposition result.

**45.** A data policing method, the method comprising the steps of:

receiving a packet;

adding a time credit to ones of token counts to generate respective ones of second token counts;

applying the ones of second token counts to generate a policing result for the packet;

applying the policing result to determine whether to subtract size debit from at least one of the second token counts to generate at least one third token count or not; and

subtracting the size debit from at least one of the second token counts to generate at least one third token count if such subtraction has been determined through applying the policing result.

**46.** A data policing method, the method comprising the steps of:

receiving a packet;

adding a time credit to ones of token counts to generate respective ones of second token counts;

applying the ones of second token counts to generate a policing result for the packet;

applying the policing result to generate a disposition result for the packet;

applying the disposition result to determine whether to subtract or not a size debit from at least one of the second token counts to generate at least one third token count; and

subtracting the size debit from at least one of the second token counts to generate at least one third token count if such subtraction has been determined through applying the disposition result.

SWITCHING BACKPLANE

12

20    22    24

SWITCHING
INTERFACE
14

26

SWITCHING
INTERFACE
16

28

SWITCHING
INTERFACE
18

LANs
30

LANs
32

LANs
34

**FIG. 1**

PACKET
SWITCHING
CONTROLLER
52

ACCESS
CONTROLLER
54

50

**FIG. 2**

EP 1 158 728 A2

FIG. 3

FIG. 4

130

```
                    ┌─────────────────────┐
                    │  RECEIVE INBOUND    │
                    │     PACKET          │ ──── 180
                    └─────────────────────┘
                       │              │
           ┌───────────┘              └──────────┐
           ▼                                     ▼
┌─────────────────────┐              ┌─────────────────────┐
│  PERFORM PATTERN    │              │  CLASSIFY PACKET /  │
│  MATCH LOOKUP       │              │  IDENTIFY APPLICATION│ ──── 184
│                     │              │  PROGRAMS           │
└─────────────────────┘              └─────────────────────┘
          │                                     │
         182                                    ▼
                              ┌─────────────────────────┐
                              │  PROVIDE PROGRAM        │
                              │  IDENTIFICAITON /       │
                         186  │  CLASSIFICATION INFO    │
                              └─────────────────────────┘
          │                      │               │
          ▼                      ▼               ▼
┌──────────────────┐  ┌──────────────────┐  ┌──────────────────┐
│  GENERATE        │  │  GENERATE        │  │  GENERATE        │
│  PATTERN MATCH   │  │  SECURITY        │  │  POLICING        │
│  RECOMMENDATION  │  │  RECOMMENDATION  │  │  RECOMMENDATION  │
└──────────────────┘  └──────────────────┘  └──────────────────┘
        │                     │                      │
       188                    ▼              190      192
                   ┌──────────────────┐
         ─────────▶│  GENERATE        │◀──────────
                   │  DISPOSITION     │
                   │  DECISION        │
              194  └──────────────────┘
                       │          │
                       ▼          ▼
        ┌──────────────────┐  ┌──────────────────────┐
        │  TRANSMIT        │  │  FEEDBACK            │
   196  │  OUTBOUND PACKET │  │  DISPOSITION DECISION│ ──── 198
        └──────────────────┘  └──────────────────────┘
```

**FIG. 5**

INGRESS RATE

CBS

EBS

MARK
FORWARD

MARK
DE

MARK
DROP

200

202

CIR

CIR

ALL ABOVE EBS

EP 1 158 728 A2

FIG. 6

EP 1 158 728 A2

| | KEY | POLICING DATA | NEXT KEY | |
|---|---|---|---|---|
| | 254 | 252 | 256 | |
| `<cust 1, app1>` → | `<cust 1, app1>` | BUDGET-TIMESTAMP-DROP BAL-DE BAL-DROP LIM-DE LIM | `<cust1, 000>` | RATE CHECK 1a  —258 |
| `<cust 1, app2>` → | `<cust 1, app2>` | BUDGET-TIMESTAMP-DROP BAL-DE BAL-DROP LIM-DE LIM | `<cust1, 000>` | RATE CHECK 1b  —260 |
| | `<cust 1, app3>` | BUDGET-TIMESTAMP-DROP BAL-DE BAL-DROP LIM-DE LIM | `<cust1, 000>` | |
| | `<cust 2, app1>` | BUDGET-TIMESTAMP-DROP BAL-DE BAL-DROP LIM-DE LIM | `<cust2, 000>` | |
| | `<cust 2, app2>` | BUDGET-TIMESTAMP-DROP BAL-DE BAL-DROP LIM-DE LIM | `<cust2, 000>` | |
| | `<cust 2, app3>` | BUDGET-TIMESTAMP-DROP BAL-DE BAL-DROP LIM-DE LIM | `<cust2, 000>` | |
| | `<cust 1, 000>` | BUDGET-TIMESTAMP-DROP BAL-DE BAL-DROP LIM-DE LIM | `<000, 000>` | RATE CHECK 2ab  —262 |
| | `<cust 2, 000>` | BUDGET-TIMESTAMP-DROP BAL-DE BAL-DROP LIM-DE LIM | `<000, 000>` | |
| | `<cust 3, 000>` | BUDGET-TIMESTAMP-DROP BAL-DE BAL-DROP LIM-DE LIM | `<000, 000>` | |

254a  254b    252a  252b  252c  252d  252e  252f

250

**FIG. 7**

FIG. 8

$$* \text{ balance}_{new} = \text{balance}_{old} - [\text{budget} * (\text{time} - \text{timestamp})] + \text{packet size}$$

FLOW INFO

402

FIELD EXTRACTOR

404

PACKET SIZE CALCULATOR

406

PACKET SIZE BUFFER

PACKET BUFFER

GENERIC DECISION LOGIC

DEFERRED DEBIT POLICING LOGIC

PACKET SIZE INFO

408

GENERIC DECISION RESULT

410

POLICING RESULT

DISPOSITION LOGIC

414

412

DISPOSITION RESULT

400

FIG. 9